# EUROPEAN PATENT APPLICATION

(11) **EP 4 835 996 A1**
(43) Date of publication of application: **04.11.2026**
(21) Application number: 26174002.1
(22) Date of filing: 22.04.2026
(51) Int. Cl.: H01M 4/36, C01F 17/32, C01F 17/218, H01M 4/62, H01M 4/131, H01M 4/525, H01M 4/02

(54) **POSITIVE ELECTRODE ACTIVE MATERIALS, POSITIVE ELECTRODES, AND RECHARGEABLE LITHIUM BATTERIES**

(30) Priority: 02.05.2025 KR 20250058540
(71) Applicant: SAMSUNG SDI CO., LTD., Yongin-si, Gyeonggi-do 17084 (KR)
(72) Inventor: CHOI, Minjae, 17084 Yongin-si (KR); CHO, Yongmok, 17084 Yongin-si (KR); CHUNG, Hyunjei, 17084 Yongin-si (KR); LEE, Sangheon, 17084 Yongin-si (KR)
(74) Representative: Maiwald GmbH

(57) **Abstract**

A positive electrode active material for a rechargeable lithium battery includes a core particle including a lithium cobalt-based oxide; and a coating layer on a surface of the core particle and containing yttrium and a metal M, and the metal M includes Al, B, Mg, Ti, V, W, Zr, or a combination thereof, a content of yttrium in the coating layer is greater than or equal to about 0.02 wt% and less than about 0.2 wt% based on 100 wt% of the positive electrode active material. A rechargeable lithium battery includes the positive electrode active material.

## Description

### BACKGROUND

### 1. Field

Positive electrode active materials, positive electrodes, and rechargeable lithium batteries are disclosed.

### 2. Description of the Related Art

Rechargeable lithium batteries, which are easy to carry as well as implement high energy density, are widely used as power sources for mobile information terminals such as smart phones, laptops, and the like. Recently, research on rechargeable lithium batteries having high energy density is being actively made for the use as power sources for hybrid vehicles and electric vehicles and/or to store electric power.

The positive electrode active material used in rechargeable lithium batteries for portable electronic devices is mainly lithium cobalt-based oxide, and research is currently being conducted to achieve high energy density.

Methods to implement high energy density may include (i) increasing an operating voltage and (ii) increasing a mixture density of the electrode plates. If (e.g., when) the operating voltage is increased to achieve high energy density, there is a problem that structural stability of the positive electrode active material decreases and side reactions on the surface of the positive electrode active material increase.

### SUMMARY

Some example embodiments provide a positive electrode active material, a positive electrode, and a rechargeable lithium battery capable of operating at high voltage and achieving high energy density while increasing structural stability and suppressing or reducing side reactions on a surface (e.g., on a surface of the positive electrode active material).

Some example embodiments provide a positive electrode active material that includes a core particle including a lithium cobalt-based oxide; and a coating layer on a surface of the core particle and containing yttrium and a metal M, wherein the metal M includes Al, B, Mg, Ti, V, W, Zr, or a combination thereof, a content (e.g., amount) of yttrium in the coating layer is greater than or equal to about 0.02 wt% and less than about 0.2 wt% based on 100 wt% of the positive electrode active material.

Some example embodiments provide a positive electrode including a positive electrode current collector, and a positive electrode active material layer on the positive electrode current collector and including the aforementioned positive electrode active material.

Some example embodiments provide a rechargeable lithium battery including the aforementioned positive electrode, a negative electrode, and an electrolyte.

According to some example embodiments, a positive electrode active material may be operated at high voltage, thereby enabling high energy density implementation, while increasing structural stability and suppressing reducing side reactions on a surface (e.g., on a surface of the positive electrode active material). In embodiments, the positive electrode and rechargeable lithium battery including the positive electrode active material may have improved battery performance.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIG.1 is a schematic perspective view showing a portion of a cylindrical rechargeable lithium battery.
FIG. 2 is a cross-sectional view schematically illustrating a prismatic rechargeable lithium battery.
FIGS. 3 and 4 are schematic exploded perspective views of pouch-type rechargeable lithium batteries.
FIGS. 5 and 6 are scanning electron microscope (SEM) images of the surface of the positive electrode active material of Example 3.
FIGS. 7 and 8 are SEM images of the surface of the positive electrode active material of Comparative Example 1.
FIGS. 9 and 10 show the results of scanning electron microscope-energy dispersive X-ray spectroscopy (SEM-EDS) analysis of a cross-section of the positive electrode active material of Example 3.

### DETAILED DESCRIPTION

Hereinafter, example embodiments will be described in more detail so that those of ordinary skill in the art can easily implement them. However, the subject matter of this disclosure may be embodied in many different forms and should not be construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and/or the like of the constituents.

In embodiments, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, and/or the like, may be exaggerated for clarity and like reference numerals designate like elements throughout the specification. It will be understood that if (e.g., when) an element such as a layer, film, region, or substrate is referred to as being "on" another element, it can be directly on the other element or intervening elements may also be present. In embodiments, if (e.g., when) an element is referred to as being "directly on" another element, there are no intervening elements present.

In embodiments, "layer" includes not only a shape formed on the whole surface if (e.g., when) viewed from a plan view, but also a shape formed on a partial surface.

The average particle diameter may be measured by any suitable method generally available in the art, for example, by a particle size analyzer, and/or by a transmission electron microscope image and/or a scanning electron microscope image. In embodiments, it is possible to obtain an average particle diameter value by measuring using a dynamic light scattering method, performing data analysis, counting the number of particles for each particle size range, and calculating from this. Unless otherwise defined, the average particle diameter (D₅₀) may mean the diameter of particles having a cumulative volume of 50 volume% in the particle size distribution. As used herein, if (e.g., when) a definition is not otherwise provided, the average particle diameter (D₅₀) means a diameter of particles having a cumulative volume of 50 volume% in the particle size distribution that is obtained by measuring the size (diameter or major axis length) of 20 particles at random in a scanning electron microscope image.

Herein, "or" is not to be construed as an exclusive meaning, for example, "A or B" should be construed to include A, B, A+B, and/or the like.

"Metal" is interpreted as a concept including ordinary metals, transition metals and metalloids (semi-metals).

### Positive Electrode Active Material

A positive electrode active material according to some example embodiments includes a core particle including a lithium cobalt-based oxide; and a coating layer on a surface of the core particle and containing yttrium and a metal M, wherein the metal M includes Al, B, Mg, Ti, V, W, Zr, or a combination thereof, and a content (e.g., amount) of yttrium in the coating layer is greater than or equal to about 0.02 wt% and less than about 0.2 wt% based on 100 wt% of the positive electrode active material.

Lithium cobalt-based positive electrode active materials have excellent density characteristics, because they are in the form of single particles, but have a problem with poor stability if (e.g., when) operating in a high-voltage range.

As one way of achieving a high energy density of a rechargeable lithium battery, there is a method of increasing an operation voltage. However, if (e.g., when) the operation voltage is increased, the lithium cobalt-based oxide may lose its structural stability and have a side reaction with an electrolyte solution on a surface (e.g., on a surface of the lithium cobalt-based oxide).

In order to solve this problem, there is a method of coating aluminum on the surface of the lithium cobalt-based oxide to improve the structural stability of the lithium cobalt-based oxide and suppress or reduce the side reaction with an electrolyte solution.

However, an aluminum-containing coating layer may improve surface characteristics of the lithium cobalt-based oxide and thus have effects of increasing the structural stability and suppressing or reducing the side reaction with an electrolyte solution, but aluminum cations (Al³⁺) of the coating layer may diffuse into the lithium cobalt-based oxide during a post-heat treatment process in manufacturing the positive electrode active material, making the aluminum-containing coating layer thinner. Accordingly, the present inventors propose a positive electrode active material concurrently (e.g., simultaneously) coated with yttrium and metal M which do not diffuse into the lithium cobalt-based oxide to improve the structural stability and suppress or reduce the side reaction with an electrolyte solution and concurrently (e.g., simultaneously), prevent or reduce excessive thinning of the coating layer during the manufacturing process of the positive electrode active material, for example, the post-heat treatment process.

Hereinafter, the coating layer and the core particle of the positive electrode active material according to some example embodiments are described in more detail.

### Coating Layer

The coating layer contains yttrium and metal M. The coating layer according to some example embodiments contains yttrium, wherein the yttrium does not diffuse (or substantially does not diffuse) into the core particle even after the manufacturing process of the positive electrode active material, for example, the post-heat treatment, thereby preventing the coating layer from becoming too thin (or reducing excessive thinning of the coating layer).

A content (e.g., amount) of yttrium in the coating layer may be greater than or equal to about 0.02 wt% and less than about 0.2 wt% based on 100 wt% of the positive electrode active material. For example, the yttrium content in the coating layer may be about 0.02 wt% to about 0.15 wt% or about 0.02 wt% to about 0.1 wt% based on 100 wt% of the positive electrode active material. If the yttrium content in the coating layer satisfies the above ranges, while the positive electrode active material had neither deteriorated capacity nor an increase in resistance (e.g., electrical resistance), a suitable or satisfactory coating layer may be formed thereon, effectively suppressing or reducing the side reaction with an electrolyte and effectively reducing gas generation under high voltage and/or high temperature conditions and in addition, improving high temperature cycle-life.

The yttrium content in the coating layer may be measured through inductively coupled plasma mass spectrometry (ICP-MS). For example, the yttrium content in the coating layer may be measured by dissolving the positive electrode active material in a power state in acid, diluting the solution with distilled water and/or the like, and injecting the diluted solution into an IPC-MS device to calculate a concentration (10⁻⁴ ppm = wt%) of yttrium relative to a total weight of the positive electrode active material.

An embodiment including both yttrium and metal M in the coating layer, compared to a comparative example including either one in the coating layer, may improve initial charge/discharge capacity and cycle-life characteristics but significantly reduce gas generation under high voltage and/or high temperature operating conditions.

The metal M may include Al, B, Mg, Ti, V, W, Zr, or a combination thereof.

Based on 100 wt% of the positive electrode active material, a content (e.g., amount) of the metal M in the coating layer may suitably vary depending on a component of the metal M but may be, for example, greater than or equal to about 0.01 wt% and less than about 0.5 wt%.

In the coating layer, the content (Y) of metal M to the content (X) of yttrium may have a weight ratio (Y/X) of about 0.05 to about 25, about 0.1 to about 20, about 0.5 to about 18, about 1 to about 16, about 2 to about 14, or about 2.5 to about 13.5. If the weight ratio of the content of metal M to that of yttrium in the coating layer is within the ranges, under high voltage or high temperature conditions, initial charge/discharge capacity and cycle-life characteristics may be improved, but gas generation may be reduced. The content of metal M means a single content (e.g., an amount of only one metal M), if the metal M is single Al, B, Mg, Ti, V, W, or Zr, but means a sum content (e.g., a total amount), if the metal M is a combination of the elements.

For example, the metal M may be Al, Mg, Ti, or a combination thereof. In embodiments, the positive electrode active material may improve initial charge/discharge capacity and cycle-life characteristics but reduce gas generation under high voltage and/or high temperature conditions.

If the metal M includes Al, a content (e.g., amount) of Al may be suitably or appropriately adjusted. For example, the Al content in the coating layer may be greater than about 0.05 wt% and less than about 0.2 wt%, about 0.07 wt% to about 0.18 wt%, or about 0.1 wt% to about 0.15 wt% based on 100 wt% of the positive electrode active material. If the Al content in the coating layer satisfies the above ranges, a uniform (e.g., substantially uniform) and thin coating layer may be formed, thereby providing a positive electrode active material having no increase in resistance (e.g., electrical resistance) and effectively suppressing or reducing a side reaction with an electrolyte, and a rechargeable lithium battery including the positive electrode active material may exhibit improved cycle-life characteristics under high voltage and high temperature conditions. For example, if the metal Al content in the coating layer exceeds the above ranges, the positive electrode active material may have a non-uniform coating layer and/or an increase in resistance (e.g., electrical resistance), thereby cycle-life characteristics of a rechargeable lithium battery including the same. If the metal Al content in the coating layer is less than the above ranges, the positive electrode active material may have a coating layer having an inappropriate or unsuitable thickness and an insignificant effect of suppressing or reducing the side reaction with an electrolyte. The metal Al content in the coating layer may be measured through the inductively coupled plasma mass spectrometry (ICP-MS), which may be the same method as that of measuring a yttrium content (e.g., amount) in the coating layer.

In embodiments, a weight ratio of the Al content to the yttrium content in the coating layer may be about 1 to about 9, about 1 to about 8.5, about 1 to about 8, or about 1 to about 7.5. In embodiments, the yttrium content and the Al content in the coating layer may be measured through ICP-MS.

If the metal M includes Mg, a content (e.g., amount) of Mg in the coating layer may be about 0.01 wt% to about 0.15 wt%, about 0.03 wt% to about 0.13 wt%, about 0.05 wt% to about 0.11 wt%, or about 0.08 wt% to about 0.1 wt%, for example, about 0.1 wt% based on 100 wt% of the positive electrode active material. If the Mg content in the coating layer is within the above ranges, on the surface of the positive electrode active material, a side reaction with an electrolyte solution may be effectively suppressed or reduced, while promoting lithium ion diffusion, thereby improving output characteristics of a rechargeable lithium battery including the same. If the Mg content in the coating layer exceeds the above ranges, capacity may be reduced, but if the Mg content in the coating layer is less than the above ranges, high temperature cycle-life characteristics may be deteriorated. The metal Mg content in the coating layer may be measured through inductively coupled plasma mass spectrometry (ICP-MS), which may be the same method as that of measuring the yttrium content in the coating layer.

In embodiments, a weight ratio of the Mg content to the yttrium content in the coating layer may be about 1 to about 9, about 1 to about 8, about 1 to about 7, about 1 to about 6, or about 1 to about 5. In embodiments, the yttrium content and the Mg content in the coating layer may be measured through ICP-MS.

In embodiments, if the metal M is Ti, a content of Ti in the coating layer may be about 0.01 wt% to about 0.1 wt%, about 0.03 wt% to about 0.09 wt%, or about 0.05 wt% to about 0.07 wt%, for example, about 0.07 wt% based on 100 wt% of the positive electrode active material. In embodiments, if the Ti content in the coating layer is within the above ranges, the positive electrode active material may exhibit improved structural stability and increased thermal stability, thereby improving rate capability of a rechargeable lithium battery including the same. If the Ti content in the coating layer exceeds the above ranges, capacity may be reduced. The Ti content in the coating layer may be measured through inductively coupled plasma mass spectrometry (ICP-MS), which may be the same method as that of measuring the yttrium content in the coating layer.

In embodiments, a weight ratio of the Ti content to the yttrium content in the coating layer may be about 0.7 to about 4, about 0.7 to about 3.8, 0.7 to about 3.6, or about 0.7 to about 3.5. In embodiments, the yttrium content and the Ti content in the coating layer may be measured through ICP-MS.

In the coating layer, yttrium and metal M may exist in the form of oxides. For example, the coating layer may include a yttrium oxide and a metal M oxide. The yttrium oxide may include, for example, Y₂O₃. The metal M oxide may suitably vary depending on a type (or kind) of the metal M, for example, if the metal M is Al, Al oxides may include Al₂O₃, if the metal M is Mg, Mg oxides includes MgO, and if the metal M is Ti, Ti oxides may include TiO₂, but the present disclosure is not limited thereto.

The coating layer may be in the form of a film (e.g., a continuous film) or an island (e.g., discrete islands that do not directly physically contact each other). For example, the film type (or kind) may be a film shape continuously wrapping around the surface of the core particle, for example, a shell shape wrapping the entire surface of the core particle. For example, the film may completely and continuously surround the core particle. This is distinct from a structure in which only portion of the surface of the core particle is partially coated. For example, the island type (or kind) may discontinuously exist on the surface of the core particle (e.g., in which discrete islands do not directly physically contact each other), while partially exposing the surface of the core particle.

The coating layer may have a thickness of about 30 nm to about 500 nm, for example about 30 nm to about 450 nm, about 30 nm to about 400 nm, about 30 nm to about 350 nm, about 30 nm to about 300 nm, about 30 nm to about 250 nm, about 30 nm to about 200 nm, about 30 nm to about 150 nm, about 50 nm to about 500 nm, about 80 nm to about 500 nm, or about 100 nm to about 500 nm. If the thickness of the coating layer satisfies the above ranges, the structural stability of the positive electrode active material may be improved without increasing resistance (e.g., electrical resistance) or reducing capacity due to the coating, and the side reaction with the electrolyte may be effectively suppressed or reduced. The thickness of the coating layer may be measured through, for example, time-of-flight-secondary ion mass spectrometry (TOF-SIMS), X-ray photoelectron spectroscopy (XPS), or SEM-EDS analysis, and the thickness range of the coating layer may be measured through SEM-EDS.

The coating layer according to some example embodiments has a thin thickness of several to several hundred nanometers, while having a uniform (e.g., substantially uniform) thickness. For example, a deviation in a coating layer thickness in one positive electrode active material particle may be less than or equal to about 20%, less than or equal to about 18%, or less than or equal to about 15%. In embodiments, the deviation in the coating layer thickness refers to the coating layer thickness within one positive electrode active material particle. For example, the deviation of the coating layer thickness may be calculated by measuring the thickness of 10 points in an electron microscope image of the cross-section of a single positive electrode active material particle to calculate an arithmetic average, and then dividing the absolute value of the difference between one data and the arithmetic mean value by the arithmetic mean value and multiplying by 100. The fact that the deviation or standard deviation of the coating layer thickness satisfies the above range means that a coating layer of uniform (e.g., substantially uniform) thickness is well formed in the form of a film on the surface of the positive electrode active material particle. Accordingly, structural stability of the positive electrode active material is improved, side reactions with the electrolyte are effectively suppressed or reduced, and the increase in resistance (e.g., electrical resistance) or decrease in capacity due to coating can be minimized or reduced.

In the coating layer, according to the characteristics of each element, the yttrium exists in an island form, and the metal M may exist in a continuous film form or an island form according to the characteristics of the metal element.

For example, if (e.g., when) the metal M includes Al, Al may exist in the form of a continuous film. In embodiments, yttrium and Al may be mixed within one coating layer, and in embodiments, yttrium may exist in the form of islands, and Al may exist in the form of a continuous film or in the form of islands, but there is no limitation on the forms.

In embodiments, yttrium and Al may each form separate layers. For example, a coating layer according to some example embodiments may include a first coating layer including yttrium and a second coating layer including Al, wherein the second coating layer may be formed on a surface of a core particle, and the first coating layer may be formed on the second coating layer. The second coating layer in the form of a thin film may be formed if (e.g., when) Al is first attached or absorbed onto the surface of the core particle, and then yttrium may be coated thereon to form a first coating layer. In embodiments, yttrium and Al may be mixed in the first coating layer and the second coating layer, but the first coating layer may be an yttrium-rich coating layer with yttrium as the main component, and the second coating layer may be a metal M-rich coating layer with Al as the main component. In embodiments, yttrium may exist in the form of islands in the first coating layer, but there is no particular limitation.

In embodiments, the thicknesses of the first coating layer and the second coating layer are not particularly limited, but the thickness of the first coating layer may be about 10 nm to about 200 nm, for example, about 20 nm to about 200 nm, about 30 nm to about 200 nm, or about 30 nm to about 180 nm. The thickness of the second coating layer may be about 20 nm to about 300 nm, for example about 20 nm to about 250 nm, about 20 nm to about 200 nm, about 30 nm to about 300 nm, or about 50 nm to about 300 nm. If (e.g., when) each thickness satisfies the above ranges, the structural stability of the positive electrode active material is improved without increasing resistance (e.g., electrical resistance) or decreasing capacity due to the coating, and side reactions with the electrolyte are effectively suppressed or reduced, thereby effectively reducing the amount of gas generated during high-voltage, high-temperature operation.

If (e.g., when) the metal M includes Mg and/or Ti, the Mg and Ti may each exist in the form of islands within the coating layer.

### Core Particles

The core particles include a lithium cobalt-based oxide. The lithium cobalt-based oxide means an oxide containing lithium and cobalt, and optionally containing other elements in addition to lithium and cobalt. The positive electrode active material including core particles including lithium cobalt-based oxide may achieve high capacity.

The lithium cobalt-based oxide may be, for example, represented by Chemical Formula 1.

Chemical Formula 1 Liₐ₁Coₓ₁M¹_{y1}O_{2-b1}X_{b1}

In Chemical Formula 1, 0.9≤a1≤1.8, 0.7≤x1≤1, 0≤y1≤0.3, 0.9≤x1+y1≤1.1, and 0≤b1≤0.1, M¹ is Al, B, Ba, Ca, Ce, Cr, Cu, Fe, Mg, Mn, Mo, Ni, Se, Si, Sn, Sr, Ti, V, W, Y, Zn, Zr, or a combination thereof, and X is F, P, S, or a combination thereof.

In Chemical Formula 1, x1 may be 0.8≤x1≤1, 0.9≤x1≤1, or 0.95≤x1 <1. M¹ may be for example Al, Ca, Ce, Cr, Cu, Fe, Mg, Mo, Se, Sr, Ti, V, W, Y, Zn, Zr, or a combination thereof. M¹ may play a role in increasing the structural stability of lithium cobalt-based oxide at high voltage, thereby suppressing or reducing structural changes and/or collapse due to the movement of lithium ions.

The lithium cobalt-based oxide may be in the form of particles, and the average particle diameter (D₅₀) of the particles may be, for example, about 1 µm to about 30 µm. For example, the lithium cobalt-based oxide may be large particles having an average particle diameter (D₅₀) of about 9 µm to about 25 µm, or small particles having an average particle diameter (D₅₀) of about 0.5 µm to about 8 µm, and may be an appropriate or suitable mixture of large and small particles. The average particle diameter (D₅₀) of the particles may be, for example, about 10 µm to about 20 µm, or about 12 µm to about 18 µm, and the average particle diameter (D₅₀) of the small particles may be, for example, about 1 µm to about 6 µm, or about 2 µm to about 5 µm. If (e.g., when) the lithium cobalt-based oxide includes a mixture of large and small particles, the large particles may be included in an amount of about 60 wt% to about 95 wt%, or about 70 wt% to about 90 wt%, and the small particles may be included in an amount of about 5 wt% to about 40 wt%, or about 10 wt% to about 30 wt%, based on 100 wt% of the total of large and small particles. As used herein, if (e.g., when) a definition is not otherwise provided, the average particle diameter (D₅₀) means a diameter of particles having a cumulative volume of 50 volume% in the particle size distribution that is obtained by measuring the size (diameter or major axis length) of 20 particles at random in a scanning electron microscope image for positive electrode active materials.

In some example embodiments, the lithium cobalt-based oxide may have an average particle diameter (D₅₀) of about 10 µm to about 20 µm. For example, the average particle diameter (D₅₀) of the lithium cobalt-based oxide may be about 10 µm to about 18 µm, or about 12 µm to about 18 µm.

The shape of the lithium cobalt-based oxide particles may be irregular, spherical, or ellipsoidal, but the present disclosure is not limited thereto and the shape may be any suitable shape.

### Method for Preparing Positive Electrode Active Material

The positive electrode active material includes the aforementioned core particles and a coating layer including the aforementioned yttrium and metal M on the surface of the core particles, thereby enabling operation at a high voltage and realizing a high energy density, and also suppressing or reducing side reactions with an electrolyte solution at the surface of the positive electrode active material, and the yttrium of the coating layer does not diffuse into the core particles even after post-heat treatment, thereby preventing the coating layer from becoming thinner (or reducing excessive thinning of the coating layer).

The core particles including the lithium cobalt-based oxide may be prepared according to any suitable method generally available in the art, or may be purchased and used as commercially available ones. For example, a lithium cobalt-based oxide may be prepared by mixing a lithium cobalt-based hydroxide and a lithium raw material and heat-treating them.

The obtained lithium cobalt-based oxide may be described in substantially the same manner as described in the section of the core particles of the positive electrode active material, and is therefore not repeated below.

Next, a coating layer according to some example embodiments may be formed by adding the obtained lithium cobalt-based oxide to a solution in which a yttrium raw material and a metal M raw material are mixed in an aqueous solvent, mixing the mixture, and then performing drying and heat treatment of the mixture. This may be referred to as a wet coating method.

The aqueous solvent may include distilled water, an alcohol-based solvent, or a combination thereof. The yttrium raw material may include, for example, yttrium nitrate, yttrium sulfate, yttrium carbonate, yttrium hydroxide, yttrium oxide, or a combination thereof. For example, it may include yttrium oxide, and for example, it may include Y₂O₃.

The metal M raw material may include, for example, metal M nitrate, metal M sulfate, metal M carbonate, metal M hydroxide, metal M oxide, or a combination thereof. Depending on the type (or kind) of metal M, the type (or kind) of metal M raw material may be different. For example, if the metal M is Al, it may include Al hydroxide, for example, Al(OH)₃; if the metal M is Mg, it may include Mg carbonate, for example, MgCO₃; and if the metal M is Ti, it may include Ti oxide, for example, TiO₂.

Drying after the mixing process may be understood as a process of removing the aqueous solvent, and may be performed at, for example, about 40 °C to about 240 °C, about 100 °C to about 220 °C, or about 100 °C to about 200 °C.

The heat treatment may be understood as a process of forming a coating layer on the surface of the core particles, and may be performed, for example, in an oxygen atmosphere at a temperature in a range of about 700 °C to about 1000 °C, about 800 °C to about 980 °C, or about 850 °C to about 950 °C for about 2 to about 20 hours, or about 3 to about 10 hours.

The coating layer formed according to the above method and the positive electrode active material including the coating layer may be described in substantially the same manner as described in the section of the positive electrode active material, and are therefore not repeated below.

### Positive Electrode

According to some example embodiments, a positive electrode includes a positive electrode current collector, and a positive electrode active material layer on the positive electrode current collector and including the aforementioned positive electrode active material. According to some example embodiments, the positive electrode may be driven even at high voltage and its capacity and cycle-life characteristics may be improved.

### Positive Electrode Current Collector

The positive electrode current collector is not particularly limited as long as it has conductivity (e.g., electrical conductivity) and does not cause a chemical change (e.g., an undesirable chemical change) in the rechargeable lithium battery, and may be an aluminum foil and/or a stainless steel foil having a thickness of about 10 µm to about 15 µm.

### Positive Electrode Active Material Layer

The positive electrode active material layer includes the aforementioned positive electrode active material.

The example details of the positive electrode active material are the same as described above, and thus are not repeated below.

An amount of the positive electrode active material may be about 60 wt% to about 99.9 wt%, about 70 wt% to about 99.8 wt%, about 80 wt% to about 99.5 wt%, or about 90 wt% to about 99 wt% based on 100 wt% of the positive electrode active material layer.

The positive electrode active material layer may further include a first positive electrode active material, which is a positive electrode active material generally used in rechargeable lithium batteries, in addition to the aforementioned positive electrode active material. The first positive electrode active material may include one or more selected from a lithium cobalt-based oxide, a lithium nickel cobalt manganese oxide, a lithium nickel cobalt aluminum oxide, a lithium iron phosphate, and a lithium manganese oxide, but is not necessarily limited thereto, and any suitable positive electrode active material available in the art may be used. For example, a compound represented by any one selected from chemical formulas LiₐA_{1-b}B_{b}D₂ (wherein, in the above chemical formula, 0.90≤a≤1.8, and 0≤b≤0.5); LiₐE_{1-b}B_{b}O_{2-c}D_{c} (wherein, in the above chemical formula, 0.90≤a≤1.8, 0≤b≤0.5, 0≤c≤0.05); LiE_{2-b}B_{b}O_{4-c}D_{c} (wherein, in the above chemical formula, 0≤b≤0.5, 0≤c≤0.05); LiₐNi_{1-b-c}Co_{b}B_{c}D_{α} (wherein, in the above chemical formula, 0.90≤a≤1.8, 0≤b≤0.5, 0≤c≤0.05, 0<α≤2); LiₐNi_{1-b-c}Co_{b}B_{c}O_{2-α}F_{α} (wherein, in the above chemical formula, 0.90≤a≤1.8, 0≤b≤0.5, 0≤c≤0.05, 0<α < 2); LiₐNi_{1-b-c}Mn_{b}B_{c}D_{α} (wherein, in the above chemical formula, 0.90≤a≤1.8, 0≤b≤0.5, 0≤c≤0.05, 0<α≤2); LiₐNi_{1-b-c}Mn_{b}B_{c}O_{2-α}F_{α} (wherein, in the above chemical formula, 0.90≤a≤1.8, 0≤b≤0.5, 0≤c≤0.05, 0<α<2); LiₐNi_{b}E_{c}G_{d}O₂ (wherein, in the above chemical formula, 0.90≤a≤1.8, 0≤b≤0.9, 0≤c≤0.5, 0.001≤d≤ 0.1); LiₐNi_{b}Co_{c}Mn_{d}GₑO₂ (wherein, in the above chemical formula, 0.90≤a≤1.8, 0≤b≤0.9, 0≤c≤0.5, 0≤d≤0.5, 0.001≤e≤0.1); LiₐNiG_{b}O₂ (wherein, in the above chemical formula, 0.90≤a≤1.8, 0.001≤b≤0.1); LiₐCoG_{b}O₂ (wherein, in the above chemical formula, 0.90≤a≤1.8, 0.001≤b≤0.1); LiₐMnG_{b}O₂ (wherein, in the above chemical formula, 0.90≤a≤1.8, 0.001≤b≤0.1); LiₐMn₂G_{b}O₄ (wherein, in the above chemical formula, 0.90≤a≤1.8, 0.001≤b≤0.1); QO₂; QS₂; LiQS₂; V₂O₅; LiV₂O₅; LiIO₂; LiNiVO₄; Li_{(3-d)}J₂(PO₄)₃ (0≤f≤2); Li_{(3-f)}Fe₂(PO₄)₃ (0≤f≤2); or LiFePO₄. In the above chemical formulas, A is Ni, Co, Mn, or a combination thereof; B is Al, Ni, Co, Mn, Cr, Fe, Mg, Sr, V, a rare earth element, or a combination thereof; D is F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

The positive electrode active material layer may optionally further include a binder, a conductive material (e.g., an electrically conductive material), or a combination thereof.

The binder improves binding properties of positive electrode active material particles with one another and with a current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon, but are not limited thereto.

The conductive material is included to provide electrode conductivity (e.g., electrical conductivity) and any suitable electrically conductive material may be used as a conductive material unless it causes a chemical change (e.g., an undesirable chemical change in the rechargeable lithium battery). Examples of the conductive material may include a carbon-based material such as natural graphite, artificial graphite, carbon black, acetylene black, Ketjen black, a carbon fiber, a carbon nanofiber, a carbon nanotube, and the like; a metal-based material of a metal powder and/or a metal fiber including copper, nickel, aluminum, silver, and the like; a conductive polymer (e.g., an electrically conductive polymer) such as a polyphenylene derivative; or a mixture thereof.

In the above positive electrode active material layer, an amount of the binder may be about 0.1 wt% to about 5 wt% based on 100 wt% of the positive electrode active material layer, and an amount of the conductive material may be about 0.1 wt% to about 5 wt% based on 100 wt% of the positive electrode active material layer.

A loading level of the positive electrode active material layer per unit area of the positive electrode current collector is not specifically limited, but may be, for example, about 10 mg/cm² to about 30 mg/cm². The loading level of the positive electrode active material layer per unit area of the positive electrode current collector may be about 15 mg/cm² to about 25 mg/cm², about 10 mg/cm² to about 20 mg/cm², or about 15 mg/cm² to about 18 mg/cm². The loading level is a parameter controlled by adjusting an amount of the positive electrode active material coated on the positive electrode current collector during the electrode manufacturing process, rather than a value determined by measurement after electrode preparation.

A mixture density of the positive electrode active material layer after compression may be about 4 g/cc to about 4.3 g/cc. The mixture density refers to a weight per unit volume of the positive electrode active material layer formed on the current collector in the positive electrode. For example, the mixture density may be calculated by dividing a mass of the positive electrode active material layer by a volume thereof, wherein the mass is obtained by measuring a weight difference of the positive electrode before and after forming the positive electrode active material layer, and the volume is calculated based on an area of the positive electrode active material layer and an average thickness thereof measured after compression.

A thickness of the above positive electrode active material layer may be about 20 µm to about 200 µm. For example, the thickness of the positive electrode active material layer may be about 30 µm to about 100 µm, about 40 µm to about 80 µm, or about 40 µm to about 60 µm. The thickness of the positive electrode active material layer may be measured through SEM images of the cross-section of the compressed positive electrode.

### Others

The positive electrode may be manufactured according to any suitable positive electrode manufacturing methods generally used in the art. For example, the positive electrode may be manufactured by mixing the aforementioned positive electrode active material, and optionally a binder, a conductive material (e.g., an electrically conductive material), or a combination thereof, in a solvent to prepare a positive electrode active material slurry, coating the positive electrode active material slurry onto the positive electrode current collector, and then drying and compressing.

The solvent may be a solvent generally used in the relevant technical field, and may include dimethyl sulfoxide (DMSO), isopropyl alcohol, N-methylpyrrolidone (NMP), acetone, and/or water, and one of these may be used alone or a mixture of two or more thereof may be used. The amount of the solvent used is suitable or sufficient to dissolve or disperse the positive electrode active material, conductive material, and binder in consideration of the coating thickness and manufacturing yield of the slurry, and to have a viscosity that can exhibit excellent thickness uniformity if (e.g., when) coated for subsequent manufacturing of the positive electrode.

### Rechargeable Lithium Battery

A rechargeable lithium battery according to some example embodiments includes the aforementioned positive electrode, a negative electrode, and an electrolyte.

The rechargeable lithium battery may include a positive electrode, a negative electrode, a separator between the positive electrode and the negative electrode, and an electrolyte.

In some example embodiments, an all-solid-state rechargeable battery includes the positive electrode, a negative electrode, and a solid electrolyte layer between the positive electrode and the negative electrode.

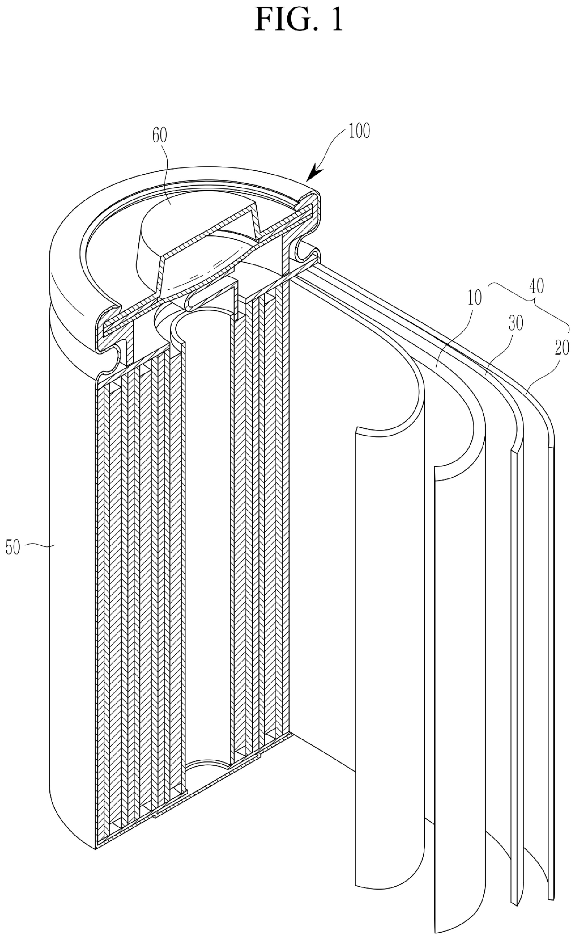

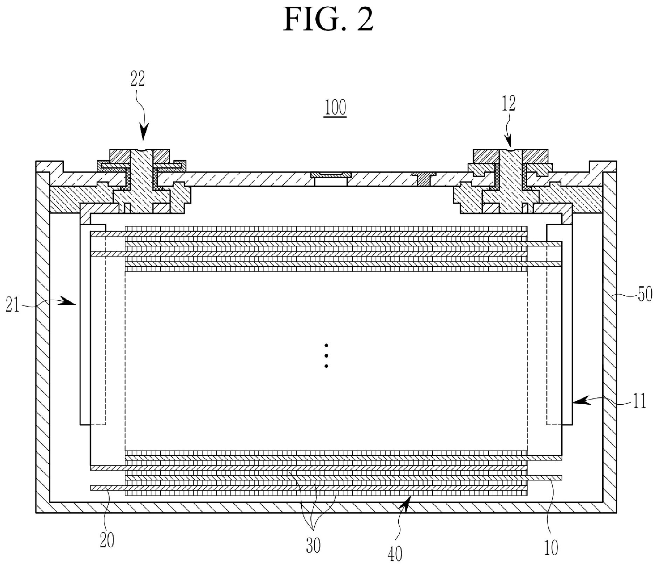

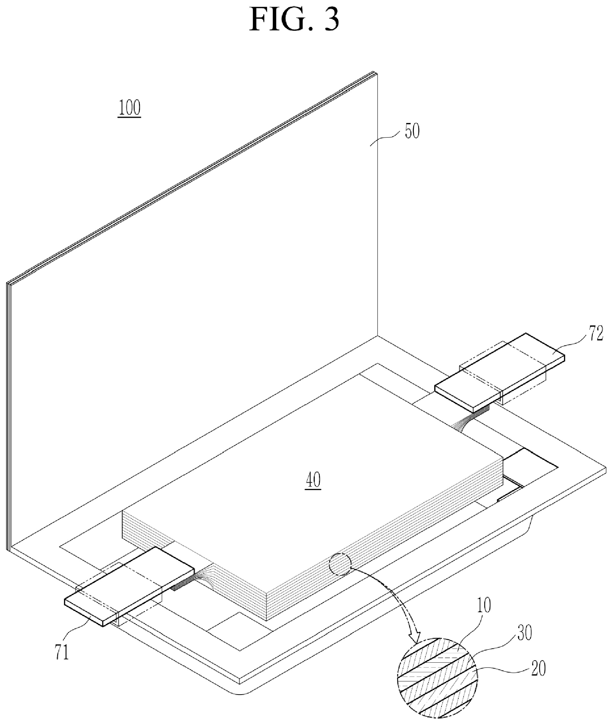

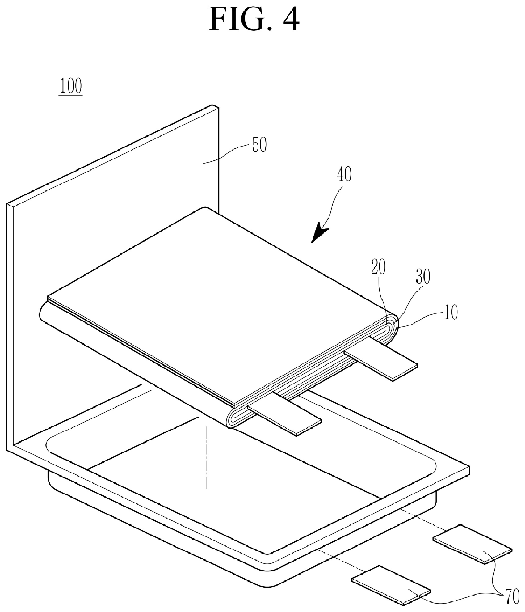

The rechargeable lithium battery may be classified into cylindrical, prismatic, pouch-shaped, coin-shaped, and/or the like depending on the shape. For example, FIG. 1 is a schematic view showing a cross-section of a cylindrical rechargeable lithium battery cut along a vertical axis and an electrode assembly 40 extending therefrom, FIG. 2 is a cross-sectional view of a prismatic rechargeable lithium battery, and FIGS. 3 and 4 are schematic exploded perspective views of pouch-type rechargeable lithium batteries. Referring to FIGS. 1 to 4, a rechargeable lithium battery 100 includes an electrode assembly 40 with a separator 30 between the positive electrode 10 and the negative electrode 20, and a case 50 in which the electrode assembly 40 is housed. The positive electrode 10, the negative electrode 20, and the separator 30 may be impregnated with an electrolyte solution.

The rechargeable lithium battery 100 may include a sealing member 60 that seals a case 50 as shown in FIG. 1. In FIG. 2, the rechargeable lithium battery 100 may include a positive electrode lead tab 11, a positive electrode terminal 12, a negative electrode lead tab 21, and a negative electrode terminal 22. The rechargeable lithium battery 100 may include an electrode tab 70 that serves as an electrical path to conduct current (e.g., electrical current) formed in an electrode assembly 40 to the outside. For example, the electrode tab 70 may be provided in the same direction as in FIG. 4, or the positive electrode tab 71 and the negative electrode tab 72 may be provided in opposite directions as in FIG. 3.

The rechargeable lithium battery according to some example embodiments may be applied to various suitable types (or kinds) of electric devices such as automobiles, motorcycles, electric bicycles, drones, ships, trains, aircraft, portable electronic devices, mobile phones, electric tools, and/or power sources for power storage, and the present disclosure is not limited thereto.

Hereinafter, example components that constitute a rechargeable lithium battery are described.

The positive electrode is the same as that described above, and thus the description thereof is not repeated here, and the negative electrode, electrolyte, and separator are described sequentially.

### Negative Electrode

A negative electrode for a rechargeable lithium battery includes a negative electrode current collector and a negative electrode active material layer on the negative electrode current collector. The negative electrode active material layer includes a negative electrode active material, and may optionally further include a binder, a conductive material (e.g., an electrically conductive material), or a combination thereof.

The negative electrode current collector is not particularly limited as long as it has conductivity (e.g., electrical conductivity) and does not cause a chemical change (e.g., an undesirable chemical change) in the rechargeable lithium battery, and may be a copper foil having a thickness of about 10 µm to about 15 µm.

The negative electrode active material may include a material capable of reversibly intercalating/deintercalating lithium ions, a lithium metal, a lithium metal alloy, a material capable of doping/dedoping lithium, and/or transition metal oxide.

The material capable of reversibly intercalating/deintercalating the lithium ions may be a carbon-based negative electrode active material.

The carbon-based negative electrode active material may include crystalline carbon, amorphous carbon, or a combination thereof. The crystalline carbon may be irregular, and/or sheet, flake, spherical, and/or fiber shaped natural graphite and/or artificial graphite. The amorphous carbon may be a soft carbon, a hard carbon, a mesophase pitch carbonization product, calcined coke, and/or the like. The soft carbon refers to a carbon material that can be graphitized, and is a material that is easily graphitized by heat treatment at a high temperature, for example, about 2800 °C. The hard carbon is a carbon material that cannot be graphitized (e.g., substantially cannot be graphitized) or is finely graphitized by heat treatment.

The negative electrode active material layer may further include other types (or kinds) of negative electrode active materials in addition to the carbon-based negative electrode active material, and may further include, for example, a lithium metal, a lithium metal alloy, a material capable of doping and dedoping lithium, and/or the like.

As the lithium metal alloy, an alloy of lithium and a metal selected from Na, K, Rb, Cs, Fr, Be, Mg, Ca, Sr, Si, Sb, Pb, In, Zn, Ba, Ra, Ge, Al, and Sn may be used.

The material capable of doping and dedoping the lithium may be a Si-based negative electrode active material and/or a Sn-based negative electrode active material. The Si-based negative electrode active material may be silicon, a silicon-carbon composite, SiOₓ (0 < x ≤ 2), a Si-Q alloy (wherein Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to some example embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on a surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core.

The Si-based negative electrode active material and/or Sn-based negative electrode active material may be mixed with the carbon-based negative electrode active material.

The negative electrode active material may be included in an amount of about 90 wt% to about 99.8 wt%, or about 94 wt% to about 99 wt%, based on 100 wt% of the negative electrode active material layer.

The binder serves to well adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

If (e.g., when) an aqueous binder is used as the negative electrode binder, a cellulose-based compound capable of imparting or increasing viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, and/or Li.

The dry binder may be a polymer material capable of becoming a fiber (e.g., capable of being fiberized), and may be, for example, polytetrafluoroethylene, polyvinylidene fluoride, a polyvinylidene fluoride-hexafluoropropylene copolymer, polyethylene oxide, or a combination thereof.

The conductive material is included to provide electrode conductivity (e.g., electrical conductivity) and any suitable electrically conductive material may be used as a conductive material (e.g., an electrically conductive material) unless it causes a chemical change (e.g., an undesirable chemical change in the rechargeable lithium battery). Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder and/or a metal fiber including copper, nickel, aluminum silver, and the like; a conductive polymer (e.g., an electrically conductive polymer) such as a polyphenylene derivative; or a mixture thereof.

An amount of the binder may be about 0.1 wt% to about 5 wt% based on 100 wt% of the negative electrode active material layer, and an amount of the conductive material may be about 0.1 wt% to about 5 wt% based on 100 wt% of the negative electrode active material layer.

The negative electrode may be manufactured according to any suitable method available in the art, for example, by mixing a negative electrode active material, and optionally a binder and/or a conductive material (e.g., an electrically conductive material), in a solvent to prepare a negative electrode active material slurry, coating the negative electrode active material slurry on a negative electrode current collector, and then drying and compressing.

The solvent may be the same type (or kind) as the solvent included in the positive electrode active material slurry, or may be an aqueous solvent.

### Electrolyte

The electrolyte for a rechargeable lithium battery may be an electrolyte solution, which may include a non-aqueous organic solvent and a lithium salt.

The non-aqueous organic solvent serves as a medium to transmit ions taking part in the electrochemical reaction of a battery.

The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, t-butyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, and may include a double bond, an aromatic ring, and/or an ether bond, and/or the like); amides such as dimethylformamide; dioxolanes such as 1,3-dioxolane, 1,4-dioxolane, and/or the like; sulfolanes, and/or the like.

The non-aqueous organic solvent may be used alone or in a mixture of two or more types (or kinds).

If (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, LiSbF₆, LiAsF₆, LiClO₄, LiAlO₂, LiAlCl₄, LiPO₂F₂, LiCl, Lil, LiN(SO₂C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

### Separator

Depending on the type (or kind) of the rechargeable lithium battery, a separator may be present between the positive electrode and the negative electrode. The separator may include polyethylene, polypropylene, polyvinylidene fluoride, a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both surfaces (e.g., two opposing surfaces) of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, and polytetrafluoroethylene (e.g., TEFLON^{®}). The porous substrate may include glass fibers, or may comprise a composite membrane of polymer and glass fibers.

The organic material may include a polyvinylidene fluoride-based polymer and/or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

Examples and comparative examples of the present disclosure are described below. However, the following examples are only examples of the present disclosure, and the present disclosure is not limited to the following examples.

### Example 1

### (1) Preparation of Positive Electrode Active Material

A core particle having a composition of a lithium cobalt-based oxide (LiCoO₂) in the form of single particles having an average particle diameter (D₅₀) of 15 µm was prepared.

The core particle along with Y₂O₃ as yttrium raw material, Al(OH)₃ as an aluminum raw material, MgCO₃ as a magnesium raw material, and TiO₂ as a titanium raw material was added to distilled water as a solvent and mixed, followed by drying in a drying oven at 100 °C for 24 hours, and then heat-treated at 950 °C for 10 hours to prepare a positive electrode active material.

The positive electrode active material had a structure including a coating layer including yttrium and aluminum formed on the surface of the core particle including the lithium cobalt-based oxide. For example, the coating layer included a second coating layer including aluminum on the core particle surface in a continuous film form and a first coating layer including yttrium in an island form on the second coating layer.

### (2) Manufacturing of Positive Electrode

The positive electrode active material, polyvinylidene fluoride as a binder, and carbon nanotube as a conductive material were mixed in a weight ratio of 98.7:0.9:0.4 (= positive electrode active material:binder:conductive material) to prepare a positive electrode active material composition. This was dispersed in an N-methyl pyrrolidone solvent to prepare a positive electrode active material slurry, which was coated on a 10 µm-thick Al foil and then dried and compressed to manufacture a positive electrode in which a positive electrode active material layer was formed on the Al thin film.

The positive electrode active material layer had a loading level of 17 mg/cm² and a mixture density after the compression of about 4.2 g/cc, based on a cross-section of the Al foil and a cross-sectional thickness of about 40 µm.

### (3) Manufacturing of Rechargeable Lithium Battery Cell

97.5 wt% of graphite as a negative electrode active material and 1.5 wt% of carboxymethyl cellulose and 1 wt% of styrene butadiene rubber as a binder were dispersed in distilled water to prepare a negative electrode active material slurry. The negative electrode active material slurry was coated on a 10 µm-thick Cu foil and then, dried and compressed to manufacture a negative electrode.

Between the positive and negative electrodes, a 10 µm-thick polyethylene separator was provided to manufacture an electrode assembly, which was inserted into a case, and an electrolyte was injected into the case to manufacture a rechargeable lithium battery cell (100 mAh level pouch cell). The electrolyte was prepared by dissolving 1.15 M LiPF₆ in a mixed solvent of EC (ethylene carbonate) : EMC (ethylmethyl carbonate) : DMC (dimethyl carbonate) in a volume ratio of 2:4:4.

### Examples 2 to 6 and Comparative Examples 1 to 6

A positive electrode active material, a positive electrode, and a rechargeable lithium battery cell were manufactured substantially in the same manner as in Example 1 except that the input amounts of the yttrium raw material, the aluminum raw material, the magnesium raw material, and the titanium raw material were stoichiometrically adjusted to have each yttrium, aluminum, magnesium, and titanium content (e.g., amount) in the coating layer based on 100 wt% of the positive electrode active material in '(1) Preparation of Positive Electrode Active Material' of Example 1 as shown in Table 1 below.

In Table 1 below, the yttrium, aluminum, magnesium, and titanium contents (e.g., amounts) in the coating layers were measured by taking 0.1 g of each of the positive electrode active material samples of Examples 1 to 6 and Comparative Examples 1 to 6, adding 1 ml of hydrochloric acid thereto, heating the mixture to dissolve the positive electrode active materials, and subsequently, adding a small amount of hydrogen peroxide thereto to promote a reaction and thus completely dissolve the positive electrode active material, preparing a solution. Subsequently, the solution was diluted to have a total volume of 10 ml by using deionized water, preparing an analysis sample. The measurement was performed by using an ICP device (OPTIMA 7300DV, PerkinElmer).

**Table 1**

| | Yttrium content (wt%) | Aluminum content (wt%) | Magnesium content (wt%) | Titanium content (wt%) |
|---|---|---|---|---|
| Example 1 | 0.02 | 0.1 | 0.1 | 0.07 |
| Example 2 | 0.05 | 0.1 | 0.1 | 0.07 |
| Example 3 | 0.1 | 0.1 | 0.1 | 0.07 |
| Example 4 | 0.02 | 0.15 | 0.1 | 0.07 |
| Example 5 | 0.05 | 0.15 | 0.1 | 0.07 |
| Example 6 | 0.1 | 0.15 | 0.1 | 0.07 |
| Comparative Example 1 | 0 | 0 | 0.1 | 0.07 |
| Comparative Example 2 | 0 | 0.1 | 0.1 | 0.07 |
| Comparative Example 3 | 0.1 | 0 | 0.1 | 0.07 |
| Comparative Example 4 | 0.01 | 0.1 | 0.1 | 0.07 |
| Comparative Example 5 | 0.2 | 0.1 | 0.1 | 0.07 |
| Comparative Example 6 | 0.05 | 0.05 | 0.1 | 0.07 |

### Evaluation Example 1: Surface Analysis of Positive Electrode Active Material

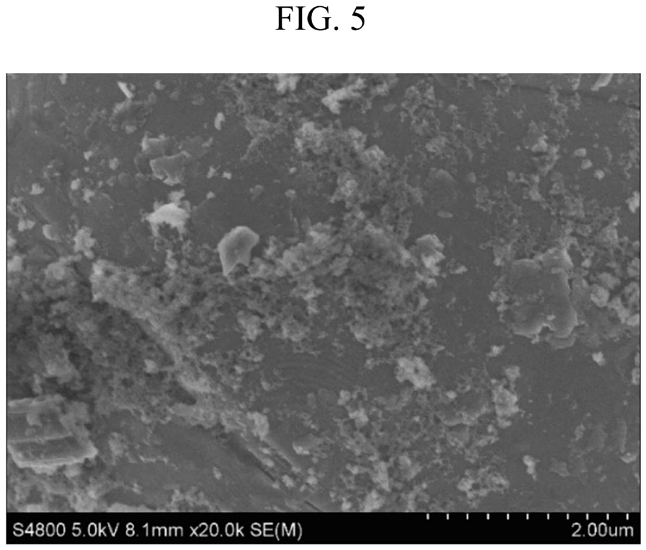

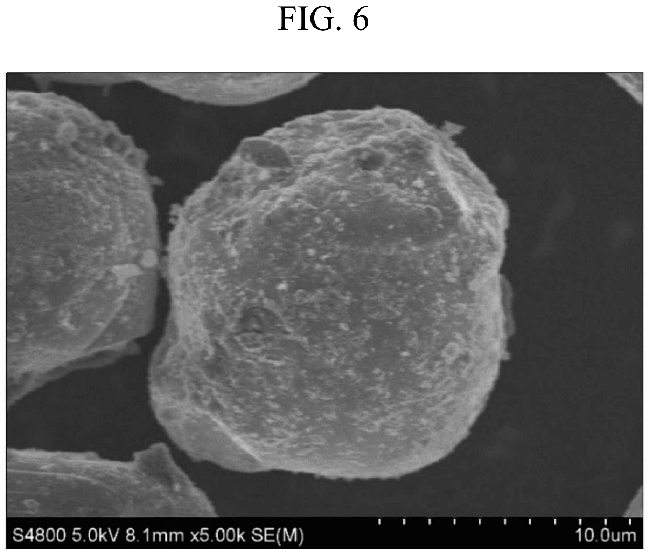

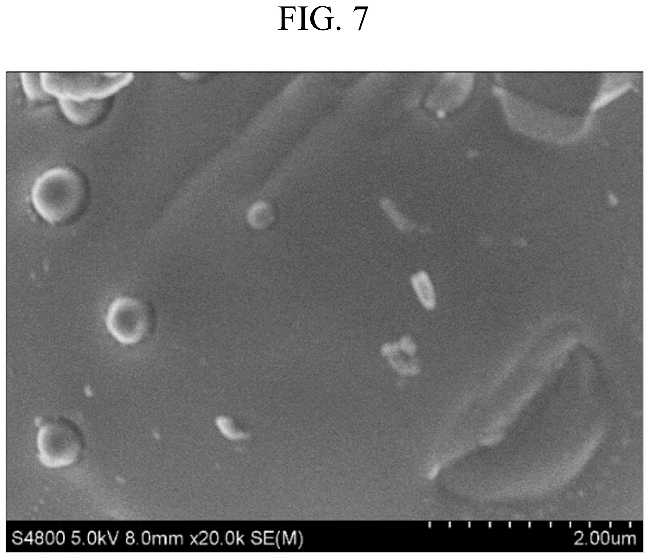

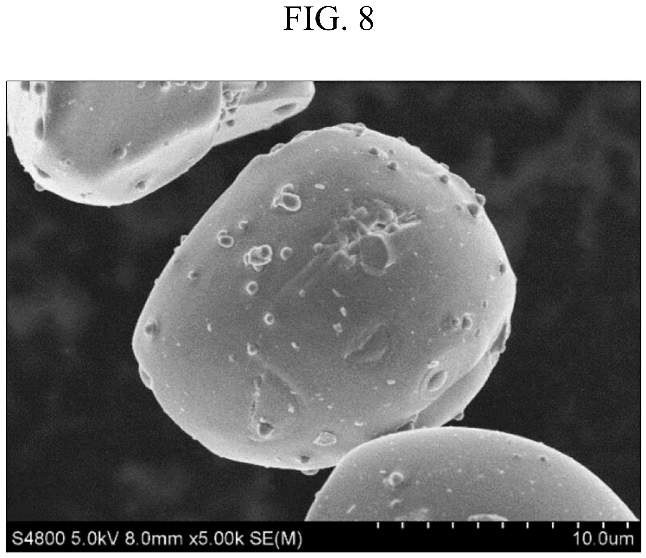

SEM images of the cross-section of the positive electrode active materials of Example 3 and Comparative Example 1 were taken. FIGS. 5 and 6 show SEM images having different magnifications of the surface of positive electrode active material prepared in Example 3. FIGS. 7 and 8 show SEM images having different magnifications of the surface of the positive electrode active material prepared in Comparative Example 1. Referring to FIGS. 5 to 8, the positive electrode active material of Example 3 was confirmed to show a different surface shape from that of the positive electrode active material of Comparative Example 1.

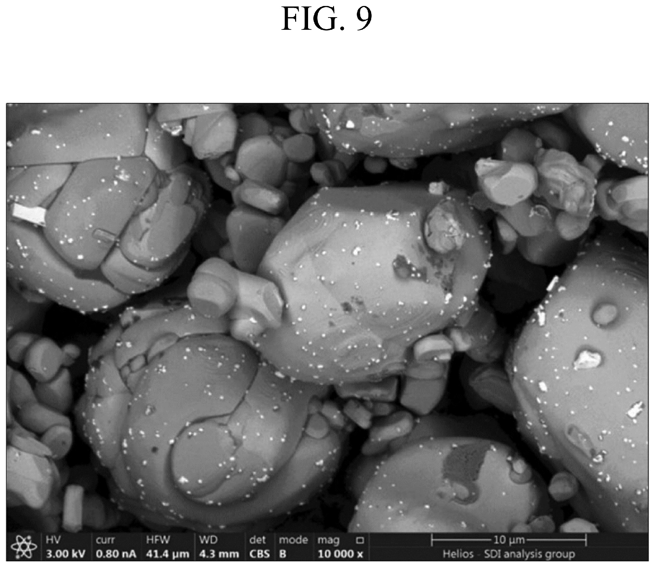

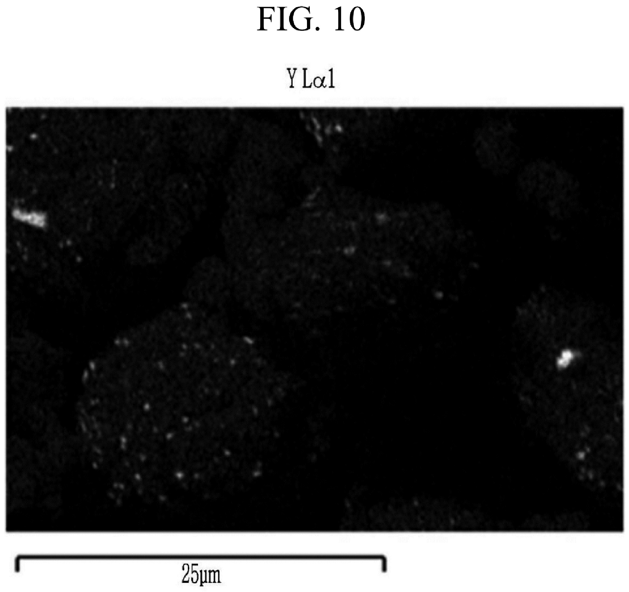

In addition, FIGS. 9 and 10 show SEM-EDS analysis images of the cross-section of the positive electrode active material according to Example 3. Referring to FIGS. 9 and 10, a coating layer including yttrium was formed on the surface of the positive electrode active material of Example 3, wherein it was confirmed that yttrium elements in the coating layer existed in an island shape.

### Evaluation Example 2: Evaluation of Battery Performance

### (1) Evaluation of Initial Charge/Discharge Capacity

The rechargeable lithium battery cells of Examples 1 to 6 and Comparative Examples 1 to 6 were charged to an upper limit voltage of 4.58 V at a constant current of a 0.2 C-rate and then, discharged to a discharge cut-off voltage of 3 V at the 0.2 C-rate at 25 °C to measure initial charge capacity and initial discharge capacity, and the results are shown in Table 2.

### (2) Cycle-life Characteristics under High Temperature and High Voltage Conditions

After the initial charge and discharge of Evaluation Example 1, the cells were 30 times or more repeatedly charged and discharged within a voltage range of 3 V to 4.59 V at a 0.35 C-rate at 45 °C to calculate a 30^{th} capacity retention rate according to Equation 1 below, and the results are shown in Table 2. 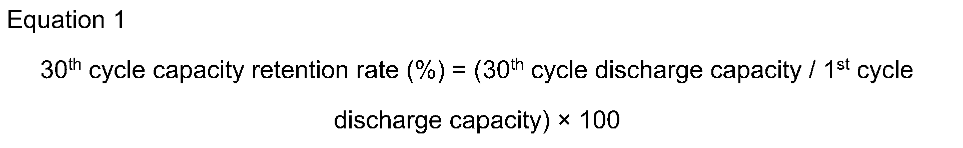 30th cycle capacity retention rate (%) = (30th cycle discharge capacity / 1st cycle discharge capacity) × 100 Equation 1

**Table 2**

| | Charge capacity (mAh/g) | Discharge capacity (mAh/g) | 30^{th} capacity retention rate (%) |
|---|---|---|---|
| Example 1 | 213 | 195.1 | 85.2 |
| Example 2 | 212.5 | 194.7 | 85.8 |
| Example 3 | 212.2 | 194.6 | 86.2 |
| Example 4 | 212.0 | 194.0 | 85.4 |
| Example 5 | 212.1 | 193.7 | 85.6 |
| Example 6 | 211.5 | 193 | 87.0 |
| Comparative Example 1 | 214.0 | 196.7 | 82.4 |
| Comparative Example 2 | 212.5 | 195.3 | 83.1 |
| Comparative Example 3 | 214.5 | 195.4 | 81.4 |
| Comparative Example 4 | 213.2 | 194.8 | 84.5 |
| Comparative Example 5 | 209.4 | 192.0 | 83.4 |
| Comparative Example 6 | 213.8 | 195.0 | 83.5 |

Referring to Table 2, the rechargeable lithium battery cells respectively including the positive electrode active materials of Examples 1 to 6, which had a yttrium content (e.g., amount) of greater than or equal to 0.02 wt% and less than 0.2 wt% and an aluminum content (e.g., amount) of greater than 0.05 wt% and less than 0.2 wt% in the coating layer, based on the same coating contents (e.g., amounts) of magnesium and titanium, exhibited excellent charge and discharge capacity and an excellent 30^{th} capacity retention rate under high temperature and high voltage conditions. On the contrary, the rechargeable lithium battery cell including the positive electrode active material of Comparative Example 1, which did not include yttrium and aluminum in the coating layer, the rechargeable lithium battery cell including the positive electrode active material of Comparative Example 2, which included aluminum but not yttrium in the coating layer, and the rechargeable lithium battery cell including the positive electrode active material of Comparative Example 3, which included yttrium but not aluminum in the coating layer, exhibited an inferior 30^{th} capacity retention rate under the high temperature and high voltage conditions to those of the examples, which confirmed that embodiments including both yttrium and aluminum in the coating layer exhibited an improved capacity retention rate under the high temperature and high voltage conditions, compared to the comparative examples not including at least one selected from yttrium and aluminum in the coating layer.

On the other hand, the rechargeable lithium battery cells respectively including the positive electrode active materials of Comparative Examples 4 to 6, which included at least one of yttrium and aluminum out of the content range in the coating layer, based on including both yttrium and aluminum, exhibited an excellent capacity retention rate, compared to those of Comparative Example 1 to 3 but an inferior capacity retention rate to those of the examples under the high temperature and high voltage conditions.

While the subject matter of this disclosure has been described in connection with what is presently considered to be practical example embodiments, it is to be understood that the present disclosure is not limited to the disclosed embodiments. On the contrary, it is intended to cover various suitable modifications and equivalent arrangements included within the spirit and scope of the appended claims, and equivalents thereof.

### Description of Symbols

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material comprising:
a core particle comprising a lithium cobalt-based oxide; and
a coating layer on the surface of the core particle and containing yttrium and a metal M,
wherein the metal M includes Al, B, Mg, Ti, V, W, Zr, or a combination thereof, and
a content of yttrium in the coating layer is greater than or equal to 0.02 wt% and less than 0.2 wt% based on 100 wt% of the positive electrode active material.

2. The positive electrode active material as claimed in claim 1, wherein:
a content of the metal M is greater than or equal to 0.01 wt% and less than 0.5 wt% based on 100 wt% of the positive electrode active material.

3. The positive electrode active material as claimed in claim 1 or 2, wherein:
a weight ratio (Y/X) of the content (Y) of the metal M to the content (X) of the yttrium in the coating layer is within a range of 0.05 to 25.

4. The positive electrode active material as claimed in any one of claims 1-3, wherein:
the metal M comprises Al, Mg, Ti, or a combination thereof.

5. The positive electrode active material as claimed in any one of claims 1-4, wherein:
the metal M comprises Al, and
a content of Al in a coating layer is greater than 0.05 wt% and less than 0.2 wt% based on 100 wt% of the positive electrode active material.

6. The positive electrode active material as claimed in any one of claims 1-5, wherein:
the metal M comprises Mg, and
a content of Mg in the coating layer is 0.01 wt% to 0.15 wt% based on 100 wt% of the positive electrode active material.

7. The positive electrode active material as claimed in any one of claims 1-6, wherein:
the metal M comprises Ti, and
a content of Ti in the coating layer is 0.01 wt% to 0.1 wt% based on 100 wt% of the positive electrode active material.

8. The positive electrode active material as claimed in any one of claims 1-7, wherein:
the coating layer is in the form of a film-type or an island-type.

9. The positive electrode active material as claimed in any one of claims 1-8, wherein:
the coating layer has a thickness of 30 nm to 500 nm.

10. The positive electrode active material as claimed in any one of claims 1-9, wherein:
the yttrium exists in the form of an island in the coating layer

11. The positive electrode active material as claimed in any one of claims 1-10, wherein:
the lithium cobalt-based oxide is represented by Chemical Formula 1:
Chemical Formula 1 Liₐ₁COₓ₁M¹_{y1}O_{2-b1}X_{b1}Liₐ₁COₓ₁M¹_{y1}O_{2-b1}X_{b1}
wherein, in Chemical Formula 1, 0.9≤a1≤1.8, 0.7≤x1≤1, 0≤y1≤0.3, 0.9≤x1+y1≤1.1, and 0≤b1≤0.1, M¹ is Al, B, Ba, Ca, Ce, Cr, Cu, Fe, Mg, Mn, Mo, Ni, Se, Si, Sn, Sr, Ti, V, W, Y, Zn, Zr, or a combination thereof, and X is F, P, S, or a combination thereof.

12. The positive electrode active material as claimed in any one of claims 1-11, wherein:
the lithium cobalt-based oxide has an average particle diameter (D₅₀) of 10 µm to 20 µm.

13. A positive electrode, comprising:
a positive electrode current collector, and
a positive electrode active material layer on the positive electrode current collector and comprising the positive electrode active material as claimed in any one of claims 1-12.

14. The positive electrode as claimed in claim 13, wherein:
the positive electrode active material layer has a loading level of 10 mg/cm² to 30 mg/cm² per one surface area of the positive electrode current collector and a mixture density after the compression of 4 g/cc to 4.3 g/cc.

15. A rechargeable lithium battery, comprising:
the positive electrode as claimed in claim 13 or 14, a negative electrode, and an electrolyte.
